# FASCICULE DE BREVET EUROPEEN

(11) **EP 1 738 891 B1**
(45) Date de publication et mention de la délivrance du brevet: **11.08.2010**
(21) Numéro de dépôt: 06290765.4
(22) Date de dépôt: 12.05.2006
(51) Int. Cl.: B29C 51/16, B29C 51/30, B65D 5/48, B65D 5/22, B65D 5/20, B65D 5/56

(54) **Procédé perfectionné de fabrication d'un emballage en un matériau semi-rigide, à l'intérieur duquel est thermoformée une pellicule de protection en matière plastique**
Verbessertes Herstellungsverfahren für eine halbfeste Verpackung, die im Inneren eine thermogeformte Schutzhülle aus Plastik besitzt.
Improved manfacturing method for a semi-rigid package which contains inside a thermoformed plastic protection cover

(30) Priorité: 29.06.2005 FR 0506642
(43) Date de publication de la demande: 03.01.2007
(73) Titulaire: Smurfit Kappa France SAS, 94160 Saint-Mande (FR)
(72) Inventeur: Roman, Patrick, 33230 Les Peintures (FR)
(74) Mandataire: Salou, Clarisse

(56) Documents cités:
- EP-A- 0 072 742
- WO-A-2004/073958
- FR-A- 2 852 923

## Description

La présente invention concerne un procédé perfectionné de fabrication d'un emballage en un matériau semi-rigide, tel que le carton ou le carton ondulé, à l'intérieur duquel est thermoformée une pellicule de protection en matière plastique.

Des emballages de ce type sont bien connus dans la technique (voir FR-A-1 515 444, EP-A-072 742 et EP-A-0 192 537) et ils sont destinés, en particulier, au conditionnement de denrées alimentaires, susceptibles d'exsuder des liquides, que la pellicule en matière plastique, imperméable aux gaz et aux liquides, empêche d'atteindre le carton ou le carton ondulé de l'emballage. Ils sont également utilisables pour le conditionnement de produits ou d'articles exigeant la présence d'une atmosphère humide ou d'un gaz de conservation.

Lorsque cet emballage comporte un ou des rebords plats, à sa partie supérieure, la pellicule de matière plastique recouvre ces rebords et il est ainsi possible, après remplissage de l'emballage, de souder un opercule sur cette pellicule, en vue de protéger parfaitement les produits conditionnés.

Depuis de nombreuses années, de tels emballages connaissent un vif succès et la Demanderesse, en particulier, a proposé toute une gamme d'emballages de ce type, commercialisés sous la marque PUR-T.

Il s'avère toutefois difficile de réaliser économiquement dans ces emballages des cloisons ou des compartiments pour y loger, à l'intérieur d'un même emballage, en les séparant, des articles distincts, ou diverses portions d'une même denrée, ou encore des assortiments de produits différents, et l'on recherche depuis longtemps dans la technique un moyen simple et facile à mettre en oeuvre pour résoudre ce problème.

EP-A-072 742, déjà cité, expose diverses solutions déjà connues dans la technique antérieure et les problèmes rencontrés, et on y propose de ménager dans la partie de fond en carton des fentes dont les bords sont décalés par déformation du carton et immobilisés ainsi par la matière plastique. Il est clair, cependant, si l'on se réfère aux dessins de ce document, que l'on n'obtient que des parties de fond légèrement décalées les unes par rapport aux autres et non de véritables compartiments.

Dans sa demande de brevet français FR-A- 2 852 923, la Demanderesse a décrit un procédé pour réaliser de véritables cloisons à l'intérieur des emballages évoqués ci-dessus, ces cloisons pouvant servir à séparer des articles ou des lots d'articles conditionnés.

Ce procédé est basé sur le fait qu'en pratiquant des orifices dans le fond en carton ou carton ondulé de l'emballage et en y introduisant des picots qui font saillie à l'intérieur de l'emballage, avant de procéder au thermoformage de la pellicule plastique, il est possible, en choisissant judicieusement les dimensions des orifices du fond et celles des picots, ainsi que les intervalles séparant ces derniers, de réaliser entre les différents picots un voile continu enveloppant ces picots et qui, après solidification de la matière plastique et retrait des picots, forme une cloison continue à l'intérieur de l'emballage, en saillie au-dessus de la pellicule recouvrant le fond. Les picots font partie intégrante de l'outillage utilisé et sont adaptés, en dimensions et en forme, au format de la barquette et au but recherché.

FR-A- 2 852 923 a par conséquent pour objet un procédé de fabrication d'un emballage en un matériau semi-rigide tel que le carton ou le carton ondulé, dont l'intérieur est protégé par une pellicule de matière thermoplastique, procédé dans lequel, après mise en forme de l'emballage en matériau semi-rigide, on thermoforme à l'intérieur de celui-ci la pellicule de matière thermoplastique, ce procédé étant caractérisé en ce que, avant de procéder au thermoformage de la matière thermoplastique, une ou des lignes de perforations ou de découpes ayant été préalablement pratiquées dans le fond de l'emballage, on engage dans ces perforations, depuis l'extérieur de l'emballage, des picots qui font saillie à l'intérieur de celui-ci de façon sensiblement perpendiculaire au fond, on procède au thermoformage de manière à envelopper la ou les lignes de picots d'un voile sensiblement continu de matière plastique, on laisse la matière plastique se solidifier, et l'on retire les picots de manière que le ou les voiles de matière plastique solidifiée forment une ou des cloisons à l'intérieur du conditionnement.

Les emballages réalisés par ce procédé connaissent un grand succès auprès des utilisateurs, car ils peuvent comporter des cloisons internes réparties suivant différentes positions, qui permettent de les diviser en plusieurs compartiments distincts.

A l'usage, ce procédé de fabrication s'est cependant révélé délicat à mettre en oeuvre, car, lors du retrait des picots de forme cylindrique et/ou conique, ceux-ci exercent un effet d'aspiration sur la matière thermoplastique partiellement solidifiée, de sorte que cette matière thermoplastique a tendance à être entraînée par les picots dans leurs mouvement de retrait. Ceci se traduit par des déformations locales du voile de matière thermoplastique destiné à former une cloison, qui affectent sa résistance mécanique et nuisent à son aspect extérieur.

En étudiant ce problème, la Demanderesse a établi que, si les picots se comportent au retrait comme des pistons aspirant la matière thermoplastique non encore parfaitement solidifiée, la raison en est que l'air ambiant ne peut pénétrer de façon suffisante dans l'espace libéré par les picots dans les doigts de matière plastique thermoformée autour de ces picots, et ceci parce que cette matière thermoplastique, au niveau des perforations ménagées dans le fond de l'emballage, enserre trop étroitement la base des picots.

Pour remédier à cet inconvénient, la Demanderesse a donc imaginé de substituer aux perforations de forme complémentaire de celle de la base des picots de la technique antérieure des incisions ménagées dans le fond de l'emballage à partir d'un même point, en y délimitant ainsi des secteurs angulaires aptes à être soulevés par les picots, lorsque ceux-ci sont engagés à l'intérieur de l'emballage pour l'opération de thermoformage, et à s'opposer au retrait de la matière thermoplastique, tout en laissant un libre passage à l'air ambiant, lorsque les picots sont dégagés de l'emballage.

L'invention a par conséquent pour objet un procédé de fabrication du type général rappelé ci-dessus, pour la fabrication d'un emballage du type barquette ou plateau en un matériau semi-rigide tel que le carton ou le carton ondulé, dont l'intérieur est protégé par une pellicule de matière thermoplastique, procédé dans lequel, après mise en forme d'une ébauche de l'emballage en matériau semi-rigide, dans le fond de laquelle au moins une ligne de perforations a été pratiquée, on engage dans ces perforations, depuis l'extérieur de l'emballage, des picots qui font saillie à l'intérieur de celui-ci de façon sensiblement perpendiculaire au fond, on procède au thermoformage de manière à envelopper la ligne de picots d'un voile sensiblement continu de matière plastique, on laisse la matière plastique se solidifier, et l'on retire les picots afin que le voile de matière plastique solidifiée forme une partie en saillie ou une cloison à l'intérieur du conditionnement, ce procédé étant caractérisé en ce que les perforations ménagées dans le fond de l'ébauche en matériau semi-rigide, comprennent chacune des incisions partant d'un même point et disposées de manière à définir dans le fond, à partir de ce point, des secteurs angulaires aptes à être soulevés par les picots, lorsque ceux-ci sont introduits dans l'emballage, et à s'opposer à une rétraction éventuelle de la pellicule thermoformée, en laissant un libre passage à l'air ambiant, lors du retrait des picots.

De façon connue en soi, les picots peuvent avoir une forme conique, cylindrique ou cylindro-conique, avec une section transversale de toute forme souhaitée.

Les rangées des perfectionnements constituées par les incisions peuvent être rectiligne ou incurvées, et elles peuvent se croiser.

L'invention a également pour objet un emballage en un matériau semi-rigide comportant à l'intérieur une pellicule de protection en matière plastique thermoformée dont une ou des parties en saillie par rapport au fond forment des séparations ou des moyens de calage entre des produits ou des articles contigus, ou encore une ou des cloisons internes séparant des compartiments distincts, cet emballage ayant été réalisé par la mise en oeuvre du procédé défini ci-dessus.

L'invention a enfin pour objet un flan prédécoupé et refoulé en un matériau semi-rigide tel que le carton ou le carton ondulé pour la réalisation de l'ébauche d'emballage utilisée dans le procédé défini ci-dessus, une partie de ce flan correspondant au fond de l'ébauche comportant au moins une ligne de perforations dans lesquelles peuvent être engagés des picots lors de la mise en oeuvre du procédé, ce flan étant caractérisé en ce que lesdites perforations comprennent chacune des incisions partant d'un même point et disposées de manière à définir à partir de ce point des secteurs angulaires aptes à être soulevés ultérieurement par les picots utilisés dans la mise en oeuvre du procédé.

Les incisions ménagées dans la partie de fond sont de préférence disposées symétriquement par rapport à leur point de concours. Elles sont avantageusement au moins au nombre de trois et de préférence au moins au nombre de quatre pour chaque perforation.

Ces perforations pratiquées dans le fond de l'emballage en carton sont visibles de l'extérieur, mais ceci ne pose aucun problème, puisque ces perforations sont obturées à l'intérieur par le film en matière thermoplastique et que, lorsque l'emballage plein est exposé en vente, il repose sur son fond, qui est ainsi dissimulé aux regards.

D'autres caractéristiques et avantages de l'invention ressortiront de la description détaillée qui va suivre d'une forme de mise en oeuvre de celle-ci. La forme de l'emballage auquel s'applique l'invention peut bien entendu être quelconque et la barquette à laquelle on se référera ci-après n'a donc aucun caractère limitatif.

Dans cette description, on se référera aux dessins schématiques annexés, sur lesquels :
La figure 1 est une vue en perspective d'une ébauche d'emballage en carton ou en carton ondulé, à laquelle peut être appliqué le procédé conforme à l'invention ;
La figure 2 est une vue en perspective de l'emballage comportant des cloisons internes issu l'ébauche de la figure 1, par mise en oeuvre du procédé selon l'invention ;
La figure 3 représente l'emballage de la figure 2, après mise en place d'un opercule en matière plastique ;
La figure 4 est une vue en plan du flan de carton ondulé prédécoupé et refoulé, dont est issu l'emballage de la figure 1 ;
La figure 5 est une vue en coupe à plus grande échelle illustrant la manière dont les picots coopèrent avec les perforations du fond lors de la mise en oeuvre du procédé de thermoformage.

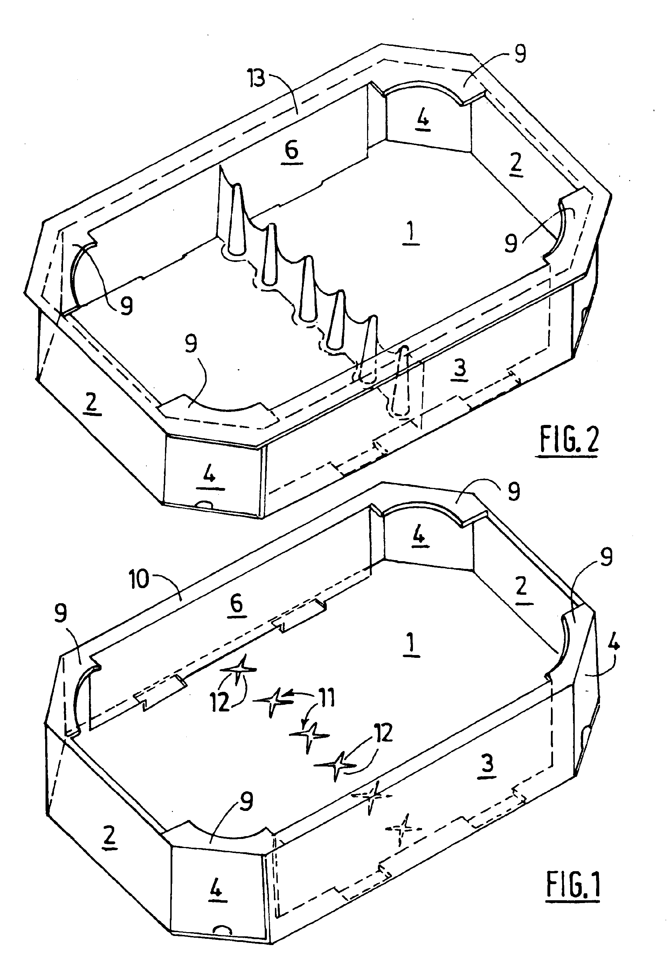

On se référera d'abord aux figures 1 à 4, qui illustrent la réalisation d'une barquette du type PUR-T évoqué ci-dessus, fabriquée par la Demanderesse.

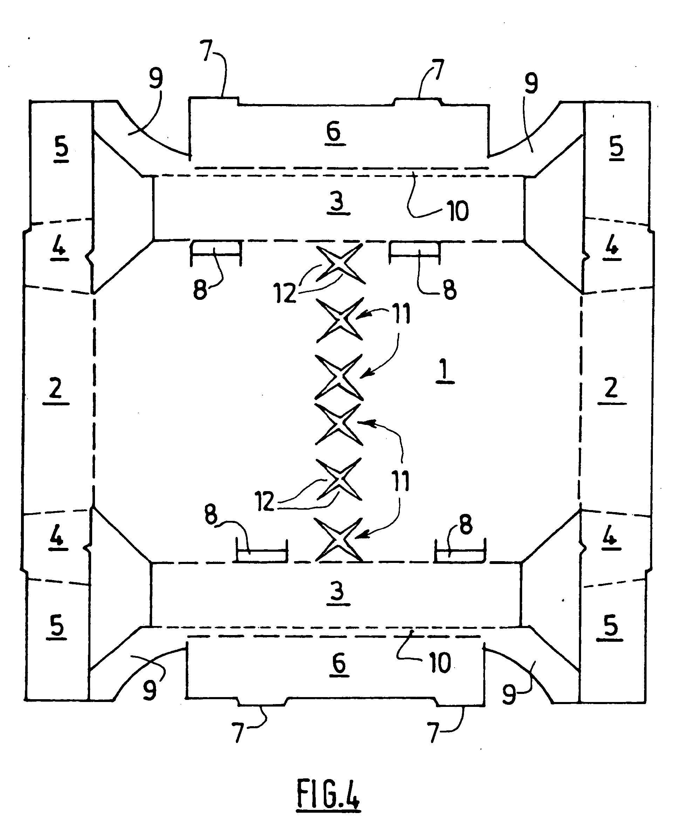

Cet emballage est réalisé par mise en forme du flan de carton ondulé prédécoupé et refoulé représenté sur la figure 4, et il comprend une partie de fond 1, sur laquelle sont articulées par des lignes de pliage parallèles deux parois longitudinales 2, deux parois transversales 3 perpendiculaires aux précédentes, et quatre parois 4 attenantes aux parois 2 et disposées obliquement entre celles-ci et les parois 3. Ces parois 4 se prolongent par des bandes 5, qui sont pincées entre les parois 3 et des panneaux 6, articulés par un double refoulage à la partie supérieure de ces parois 3 et rabattus vers l'intérieur de l'emballage, des languettes 7 faisant saillie à partir de ces panneaux 6 en direction du fond et étant engagées dans des découpes 8 de celui-ci, pour verrouiller l'emballage en carton ondulé en position montée.

Des bandes 9 prolongent obliquement les espaces 10 situés entre les deux refoulages ménagés à la partie supérieure des parois 3 et viennent se placer à l'horizontale à la partie supérieure des parois obliques 4. D'autres types de montage, utilisant par exemple des collages, peuvent naturellement être utilisés.

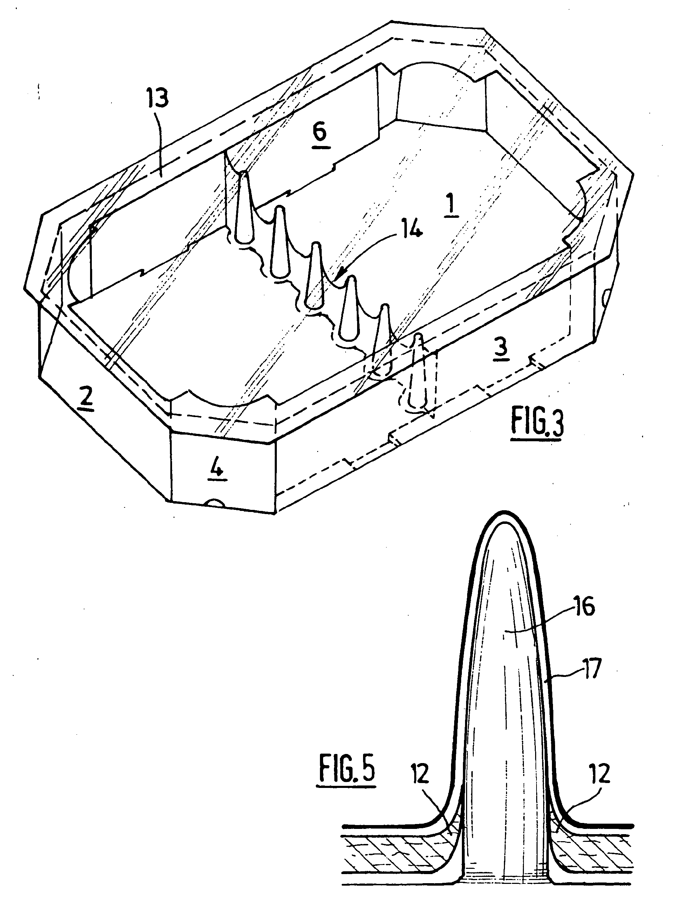

Après mise en forme de cet emballage en carton ondulé, une feuille de matière thermoplastique est habituellement thermoformée à l'intérieur de celui-ci et elle fait saillie en 13 à la partie supérieure des parois 2 à 4, ici à l'intérieur et à l'extérieur de celle-ci, pour former une assise parallèle au fond 1, sur laquelle peut être soudé un opercule de protection en matière plastique, qui apparaît sur la figure 3.

Conformément à l'invention, toutefois, au moins une rangée de perforations 11 est préalablement pratiquée dans le fond 1 en carton ondulé, pour y définir le profil de la base de cloisons destinées à diviser en divers compartiments l'intérieur de l'emballage, chacune de ces perforations comprenant ici, comme représenté sur les dessins, quatre lignes de coupe de même longueur, partant d'un même point et délimitant quatre secteurs angulaires 12, répartis symétriquement par rapport à ce point.

En vue de réaliser à l'intérieur de la barquette, par thermoformage d'une matière thermoplastique, une cloison 14 ou une partie en saillie par rapport au fond, dont la base coïncide avec la ligne de perforations 11, on engage dans ces perforations, à partir de l'extérieur, de façon connue en soi et préalablement à l'opération de thermoformage, des picots 16, qui viennent faire saillie à l'intérieur de l'emballage en carton ondulé, et l'on effectue ensuite le thermoformage de la pellicule thermoplastique.

Comme on le voit sur la figure 5, les secteurs angulaires 12 des perforations 11 sont soulevés par les picots 16, en s'écartant les uns des autres.

En choisissant de façon judicieuse les dimensions et la forme des perforations et des picots et leur espacement, ce qui est à la portée du spécialiste de la technique considérée, la pellicule thermoformée 17 forme un voile continu, qui enserre les picots 13 et fait saillie à l'intérieur de l'emballage, en formant une cloison 14 à partir des perforations 11 ou une partie en saillie par rapport au fond.

Après un refroidissement suffisant de la matière thermoplastique, il est possible de retirer les picots 16 de la pellicule formée sans risquer d'entraîner celle-ci vers l'extérieur, puisque, d'une part, elle est retenue par les secteurs angulaires 12 des perforations 11 et, d'autre part, ces secteurs angulaires sont suffisamment décalés de la base des picots et écartés les uns des autres pour que de l'air puisse circuler librement et prévenir ainsi un effet d'aspiration exercé par les picots.

Dans le cas de l'exemple illustré par les dessins, la barquette résultante comporte une unique cloison, séparant deux compartiments distincts, mais les lignes de perforations 11 pratiquées dans le fond 1 peuvent être absolument quelconques, en fonction du nombre et de la forme des compartiments souhaités à l'intérieur de l'emballage conforme à l'invention (voir, par exemple, FR-A- 2 852 923), peuvent être rectilignes ou incurvées, et peuvent se croiser. Ces perforations peuvent aussi définir des parties en saillie par rapport au fond de la barquette, ces parties étant destinées à séparer et à caler des articles ou produits contigus logés dans cette barquette.

Après mise en place de denrées, produits ou lots d'articles dans la barquette ou dans ses différents compartiments, on peut souder de façon usuelle un opercule en matière plastique sur le rebord 13 de l'emballage, pour isoler les produits conditionnés de l'atmosphère ambiante.

L'invention apporte donc un moyen particulièrement simple, pour faciliter la mise en oeuvre du procédé décrit dans FR-A-2 852 923.

## Revendications

1. Procédé de fabrication d'un emballage du type barquette ou plateau en un matériau semi-rigide tel que le carton ou le carton ondulé, dont l'intérieur est protégé par une pellicule de matière thermoplastique, dans lequel, après mise en forme d'une ébauche de l'emballage en matériau semi-rigide, dans le fond de laquelle a été pratiquée au moins une ligne de perforations, on engage dans ces perforations, depuis l'extérieur de l'emballage, des picots (16) qui font saillie à l'intérieur de celui-ci de façon sensiblement perpendiculaire au fond (1), on procède au thermoformage de manière à envelopper la ligne de picots d'un voile sensiblement continu de matière plastique, on laisse la matière plastique se solidifier, et l'on retire les picots afin que le voile de matière plastique solidifiée forme une partie en saillie ou une cloison (14) à l'intérieur du conditionnement, ce procédé étant **caractérisé en ce que** les perforations (11) ménagées dans le fond (1) de l'ébauche en matériau semi-rigide, comprennent chacune des incisions partant d'un même point et disposées de manière à définir dans le fond (1), à partir de ce point, des secteurs angulaires (12) aptes à être soulevés par les picots (16), lorsque ceux-ci sont introduits dans l'emballage, et à s'opposer à une rétraction éventuelle de la pellicule (17) thermoformée, en laissant un libre passage à l'air ambiant, lors du retrait des picots.

2. Procédé selon la revendication 1, **caractérisé en ce que** chaque perforation (11) comprend au moins trois incisions.

3. Procédé selon la revendication 2, **caractérisé en ce que** chaque perforation (11) comprend au moins quatre incisions.

4. Procédé selon l'une des revendications 1 à 3, **caractérisé en ce que** les secteurs angulaires (12) des perforations (11) sont disposés symétriquement par rapport au point d'où partent les incisions de ces perforations.

5. Emballage en un matériau semi-rigide tel que le carton ondulé, comportant à l'intérieur une pellicule de protection en matière plastique thermoformée, dont une ou des parties en saillie par rapport au fond (1) forment des séparations ou des moyens de calage entre des produits ou des articles destinés à être logés en position contiguë dans l'emballage, ou encore une ou des cloisons internes (14), cet emballage ayant été réalisé par la mise en oeuvre du procédé selon l'une des revendications 1 à 4.

6. Flan prédécoupé et refoulé en un matériau semi-rigide tel que le carton ou le carton ondulé, pour la réalisation de l'ébauche d'emballage utilisée dans le procédé selon l'une des revendications 1 à 4, une partie de ce flan qui correspond au fond (1) de l'ébauche comportant au moins une ligne de perforations (11) dans lesquelles peuvent être engagés des picots lors de la mise en oeuvre du procédé selon la revendication 1, ce flan étant **caractérisé en ce que** lesdites perforations (11) comprenant chacune des incisions partant d'un même point et disposées de manière à définir à partir de ce point des secteurs angulaires (12) aptes à être soulevés ultérieurement par les picots (13) utilisés dans la mise en oeuvre du procédé.

7. Flan selon la revendication 6, **caractérisé en ce que** les secteurs angulaires (12) des perforations (11) sont disposés symétriquement par rapport au point d'où partent ces incisions.

## Claims

1. Method of manufacturing packaging of the tub or tray type made from a semi-rigid material such as cardboard or corrugated cardboard, the inside of which is protected by a thermoplastic film, in which method, following the shaping of a packaging blank made of semi-rigid material, in the bottom of which at least one line of perforations has been made, spikes (16) which project into the packaging approximately perpendicular to the bottom (1) are inserted into these perforations from outside the packaging, thermoforming is then carried out so as to cover the line of spikes with a more or less continuous plastic shell, the plastic is allowed to solidify and the spikes are withdrawn such that the solidified plastic shell forms a projecting part or a partition (14) inside the package, this method being **characterized in that** the perforations (11) formed in the bottom (1) of the blank made of semi-rigid material each comprise incisions starting at a single point and arranged so as to define in the bottom (1), starting from this point, angular sectors (12) able to be lifted by the spikes (16) when the latter are introduced into the packaging and to prevent any retraction of the thermoformed film (17), leaving a free passage for ambient air when the spikes are withdrawn.

2. Method according to Claim 1, **characterized in that** each perforation (11) comprises at least three incisions.

3. Method according to Claim 2, **characterized in that** each perforation (11) comprises at least four incisions.

4. Method according to one of Claims 1 to 3, **characterized in that** the angular sectors (12) of the perforations (11) are arranged symmetrically with respect to the point at which the incisions of these perforations start.

5. Packaging made of a semi-rigid material such as corrugated cardboard, having on the inside a protective film made of thermoformed plastic, one or more parts of which, projecting from the bottom (1), form separations or wedging means between products or articles intended to be housed in adjacent positions in the packaging, or else form one or more internal partitions (14), this packaging having been produced by implementing the method according to one of Claims 1 to 4.

6. Precut and creased panel made of a semi-rigid material such as cardboard or corrugated cardboard, for producing the packaging blank used in the method according to one of Claims 1 to 4, a part of this panel which corresponds to the bottom (1) of the blank comprising at least one line of perforations (11) into which spikes can be inserted during the implementation of the method according to Claim 1, this panel being **characterized in that** said perforations (11) each comprise incisions starting at a single point and arranged so as to define, starting from this point, angular sectors (12) able to be lifted later by the spikes (16) used in the implementation of the method.

7. Panel according to Claim 6, **characterized in that** the angular sectors (12) of the perforations (11) are arranged symmetrically with respect to the point at which these incisions start.

## Patentansprüche

1. Verfahren zum Herstellen einer Verpackung vom Typ eines Körbchens oder einer Schale aus halbstarrem Material, wie Karton oder Wellpappe, dessen Inneres von einer dünnen Schicht eines thermoplastischen Materials geschützt ist, in die, nachdem eine Rohform der Verpackung aus halbstarrem Material in Form gebracht wurde und in deren Boden wenigstens eine Linie von Perforationen gemacht wurde, in diese Perforationen von außerhalb der Verpackung Zacken (16) eingeführt werden, die im Inneren derselben einen zum Boden (1) im Wesentlichen senkrechten Vorsprung bilden, in Thermoformen wird in der Art vorgenommen, dass die Linie der Zacken mit einer Umhüllung durchgehend aus Kunststoffmaterial umhüllt wird, es wird ermöglicht, dass sich das Kunststoffmaterial verfestigt und die Zacken werden zurückgezogen, damit die verfestigte Umhüllung aus Kunststoffmaterial einen Vorsprungsteil oder eine Trennwand (14) im Inneren des Packstücks bildet, wobei das Verfahren **dadurch gekennzeichnet ist, dass** die Perforationen (11), die in dem Boden (1) der Rohform aus halbstarrem Material herbeigeführt wurden, jeweils Einschnitte umfassen, die von dem selben Punkt ausgehen und in der Art angeordnet sind, dass in dem Boden (1), ausgehend von diesem Punkt, Winkelabschnitte (12) definiert werden, die geeignet sind durch die Zacken (16) angehoben zu werden, wenn diese in die Verpackung eingeführt werden und die einer möglichen Zusammenziehung der wärmegeformten Umhüllung (17) entgegenwirken, indem ein freier Durchlass für Umgebungsluft während des Rückziehens der Zacken belassen wird.

2. Verfahren nach Anspruch 1, **dadurch gekennzeichnet, dass** jede Perforation (11) wenigstens drei Einschnitte umfasst.

3. Verfahren nach Anspruch 2, **dadurch gekennzeichnet, dass** jede Perforation (11) wenigstens vier Einschnitte umfasst.

4. Verfahren nach einem der Ansprüche 1 bis 3, **dadurch gekennzeichnet, dass** die Winkelabschnitte (12) der Perforationen (11) symmetrisch bezogen auf den Punkt angeordnet sind, von dem die Einschnitte der Perforationen ausgehen.

5. Verpackung aus halbstarrem Material, wie Karton oder Wellpappe, im Inneren eine dünne Schutzschicht aus thermogeformtem Kunststoffmaterial umfassend, von der eine oder mehrere Vorsprungsteile bezogen auf den Boden (1) Abtrennungen bilden oder Mittel zum Verkeilen zwischen Produkten oder Artikeln, die bestimmt sind in aneinandergrenzender Position in der Verpackung untergebracht zu werden, oder noch eine oder mehrere innere Trennwände (14), wobei die Verpackung durch Einsatz eines Verfahrens nach einem der Ansprüche 1 bis 4 realisiert wird.

6. Zugeschnittene und geknickte Matrize aus halbstarrem Material, wie Karton oder Wellpappe, für die Realisierung einer Verpackungsrohform, die in dem Verfahren nach einem der Ansprüche 1 bis 4 verwendet wird, wobei ein Teil der Matrize, der dem Boden (1) der Rohform entspricht, wenigstens eine Linie von Perforationen (11) umfasst, in die Zacken während des Einsatzes des Verfahrens nach Anspruch 1 eingeführt werden können, wobei die Matrize **dadurch gekennzeichnet ist, dass** die Perforationen (11) jeweils Einschnitte umfassen, die von demselben Punkt ausgehen und in der Art angeordnet sind, dass ausgehend von diesem Punkt Winkelabschnitte (12) definiert werden, die geeignet sind anschließend durch die beim Einsatz des Verfahrens verwendeten Zacken (16) angehoben zu werden.

7. Matrize nach Anspruch 6, **dadurch gekennzeichnet, dass** die Winkelabschnitte (12) der Perforationen (11) symmetrisch bezogen auf den Punkt angeordnet sind, von dem die Einschnitte der Perforationen ausgehen.
